# EUROPEAN PATENT APPLICATION

(11) **EP 4 599 663 A1**
(43) Date of publication of application: **13.08.2025**
(21) Application number: 24156854.2
(22) Date of filing: 09.02.2024
(51) Int. Cl.: A01G 9/08, A01G 9/14

(54) **NURSERY ASSEMBLY**

(71) Applicant: WPS Horti Systems B.V., 2678 AC De Lier (NL)
(72) Inventor: VAN DER KNAAP, Arjan, DE LIER (NL); RASENBERG, Jip Karel, DE LIER (NL); GROEN, Cornelis Johannes Dirk, DE LIER (NL)
(74) Representative: EP&C

(57) **Abstract**

Nursery assembly (1) for use in a nursery. The assembly comprises a cultivation floor (2), a gantry construction (3), a tool (7), a manipulator (8), and a rail system (10) arranged along the cultivation floor (2). The gantry construction comprises: a gantry beam (4), a first and a second gantry upright (5, 6), which support the gantry beam (4) at a distance above the cultivation floor (2). The manipulator (8) is configured to be able to displace the tool (7) along the gantry beam (4) and/or to be able to rotate said tool with respect to the gantry beam. The gantry beam (4) extends transverse to the rail system (10). The gantry uprights (5, 6) are each provided, at the bottom ends thereof, with a gantry drive (15, 16). The gantry drives (15, 16) are configured to be able to displace the gantry construction (3) in a longitudinal direction (T) of the rail system (10).

## Description

The present invention relates to the field of horticulture, and more particularly to the field of nurseries.

### BACKGROUND OF THE INVENTION

Crops are cultivated in a nursery. This cultivation can take place within a greenhouse or outside in the open air.

Both inside and outside, the cultivation usually takes place on a cultivation floor. Plant containers, such as plant pots or trays, are located on or in the cultivation floor with one or more plants which are cultivated in the plant containers.

There are many kinds of cultivation floors. They can be situated (directly) on the ground, but they can also be positioned in an elevated manner, at a distance above the ground. Cultivation floors are usually provided with a watertight layer so as to be able to collect excess water and to preferably be able to reuse it. In the case of an elevated cultivation floor, the watertight layer can be on the ground under the elevated cultivation floor. If required, cultivation floors can also be provided with floor heating and/or floor cooling.

The cultivation of crops in a nursery is a very intensive process. Usually, the cultivated plants must be regularly subjected to a treatment - such as watering, feeding, being positioned further apart from each other (depending on whether they have grown larger), shaping (for example pruning), sorting, inspecting, displacing, etc. -. Many of these actions traditionally require a lot of manual work. For decades many developments have thus taken place in order to facilitate this intensive, originally manual work by means of technology and to automate it where possible.

One of these developments is the use of conveyors, such as conveyor belts. Plant containers, such as plant pots and trays, can readily be displaced through the nursery, such as supplied or removed, by means of conveyors which run along the cultivation floor. Staff can then, for example, inspect or otherwise evaluate the plants on the cultivation floor and, if necessary, pick them up and place them on the conveyor for removal to, for example, a treatment station or examination station. The crop to be cultivated can also be supplied to the cultivation floor by means of conveyors and can be picked up there from the conveyor by staff and put on the cultivation floor. Conversely, the crop can also be removed from the cultivation floor by means of the conveyors when it has, for example, been sufficiently cultivated. In order to further reduce staff deployment, the idea of cultivating the plants on conveyor belts which are located in gutters and end up at a central supply and removal conveyor was devised at the start of the 90s, see for example US 5,878,527. A whole row of plants can then be placed on the central conveyor from their cultivation conveyor belt in an automated manner and be fed by means of the central conveyor to, for example, an inspection station or treatment station for - if necessary - further treatment and subsequently be fed back to the same or a different cultivation conveyor belt again for further cultivation. This system works well, but is not equally suitable for all crops and requires a lot in terms of conveyor belt lengths and gutter lengths.

### SUMMARY OF THE INVENTION

One object of the present invention is to provide an alternative or improved nursery assembly for use in a nursery. Another object of the present invention is to provide a nursery assembly which assists or makes possible further automation of the activities in a nursery. Yet another object of the invention is to provide a nursery assembly which overcomes problems experienced in the prior art.

One or more of the objects mentioned above are achieved according to the invention by providing a nursery assembly for use in a nursery, which nursery assembly comprises:
- a cultivation floor,
- a gantry construction comprising
   - a gantry beam,
   - a first gantry upright and a second gantry upright, which gantry uprights support the gantry beam at a distance above the cultivation floor,
   - a tool, and
   - a manipulator for moving the tool with respect to the gantry beam,
      and
- a rail system along which the first gantry upright is displaceable;

wherein the rail system is along the cultivation floor and is configured as a guide of the first gantry upright when displacing the first gantry upright along the rail system;
wherein the manipulator is configured to be able to displace the tool along the gantry beam and/or to be able to rotate said tool with respect to the gantry beam;
wherein the gantry beam extends in a direction transverse to the rail system; and
wherein the gantry uprights are each provided, at the bottom ends thereof, with a gantry drive, which gantry drives are configured to be able to displace the gantry construction back and forth with respect to the rail system in a longitudinal direction of the rail system.

As outlined above in 'background of the invention', a cultivation floor is the level on which plants positioned in plant containers - such as plant pots or trays - are cultivated in those plant containers. This level can be on the ground, but can also be elevated above the ground. There are many kinds of cultivation floors. They usually comprise a watertight layer. If required, they can be provided with floor heating and/or floor cooling.

The gantry beam forms a horizontal span between the first and second gantry carriers, which support the horizontal span in a vertical direction and hold it at a distance above the ground. The gantry beam can thus be understood to be horizontal, but in addition to the form of a horizontal bar can also have a different form which provides a horizontal span. The gantry uprights can be understood to be vertical, but in addition to being able to comprise vertically arranged columns can also have a different form - for example obliquely arranged columns - which supports the horizontal span at a distance above the cultivation floor.

The gantry construction, in particular the gantry beam thereof, runs transversely with respect to the rail system. The gantry beam is arranged higher than the rail system and higher than the cultivation floor as seen in the vertical direction. Considered in the vertical direction, the rail system will usually be at the height of the cultivation floor.

According to the invention, the system is provided with a rail system along which the first gantry upright is displaceable. The rail system thus forms a mechanical guide for the first gantry upright, and for the gantry construction via the first gantry upright.

The tool may be of various types and be configured to automate activities that are currently performed manually, or to perform activities that are currently carried out in some other way, or to perform entirely new activities. The tool may, for example, comprise a sensor. The sensor may, for example, be a camera. The sensor may, for example, also be a temperature gauge which is moved along above the cultivated crop by means of the gantry construction in order to measure the temperature of, above or near the crop at multiple locations. According to another example, the tool may comprise a sprayer for spraying the crop with, for example, water, nutrients, pesticides, etc. According to yet another example, the tool may comprise a blade or cutter, by means of which the crop can then be tended or modified. According to yet another example still, the tool may comprise a gripper which is configured to grip, displace, and unload one or more plant containers or plants.

According to a further embodiment of the invention, the assembly may further comprise a conveyor which extends along the rail system. The conveyor may, for example, be provided with the rail system or, according to another example, the conveyor may also provide the rail system. Longitudinal beams of the conveyor or other components of the conveyor which extend in the longitudinal direction may, for example, form the rail system. The conveyor may be arranged along the cultivation floor, and may in this case run next to and/or above the cultivation floor. The rail system does not have to extend along the entire conveyor and the conveyor also does not have to extend along the entire rail system.

According to a further embodiment of the invention, the rail system and/or the gantry upright may be configured in such a way that the rail system is a rail system over which the first gantry upright is displaceable. Here, the rail system thus forms a carrier which completely or partially supports the first gantry upright. If the rail system completely supports the first gantry upright, the weight of the first gantry upright is supported completely by the rail system. If the rail system partially supports the first gantry carrier, the weight of the first gantry upright is supported partially by the environment, for example via wheels which are provided on the first gantry carrier and are located next to the rail system on the ground or are located in some other way on an underlying surface other than the rail system.

By mechanically coupling the gantry drive of the first gantry upright and second gantry upright - for example by driving each of them via a chain and driving these two chains by means of a common shaft - it is possible to ensure that the position of the gantry construction with respect to the rail system is maintained. However, according to the present invention, this may also be effected in a different way that is more favourable for horticulture and nurseries. According to a further embodiment of the invention, the assembly may be provided with:
- a gantry position sensor system configured to generate a gantry position signal which is representative of a horizontal angular position of the gantry beam with respect to the rail system; and
- a gantry position controller configured to, when the gantry construction is being displaced - by the gantry drives - along the rail system, control the first and second gantry drive in dependence on the gantry position signal in such a way that changes in the horizontal angular position of the gantry beam with respect to the rail system are counteracted or minimized.

In particular, according to another further embodiment, the gantry position controller may be configured to, when the gantry construction is being displaced - by the gantry drives - along the rail system, control the first and second gantry drive in dependence on the gantry position signal in such a way that the gantry beam is held perpendicular to the rail system.

The first gantry drive for the first gantry upright and the second gantry drive for the second gantry upright may in this case each have a dedicated motor and thus, from a mechanical viewpoint, be decoupled from each other - i.e. not coupled. The gantry construction is thus held at the correct angular position - in particular a perpendicular position - with respect to the rail system by virtue of the horizontal angular position - i.e. the angular position in a horizontal plane - being determined or measured by means of a gantry position sensor system and the first and second gantry drive being controlled by means of a gantry position controller on the basis of the determined/measured angular position in such a way that changes in the horizontal angular position are counteracted. If, for instance, the first gantry drive runs or appears to run slightly faster, the second gantry drive can be adjusted to run equally fast, or vice versa. This may, for example, occur because disparities/irregularities in the underlying surface over which the first and second gantry upright are displaced cause the first gantry upright and second gantry upright to undergo a mutually different displacement. However, this may also occur for other reasons, such as a disruption - for example in the power supply - of one of the drives.

The gantry position sensor system may, for example, comprise a first movement and/or displacement sensor on the first gantry upright, for example at the bottom end thereof, and a second movement and/or displacement sensor on the second gantry upright, for example at the bottom end thereof. By subtracting the sensor signals delivered by these two sensors from each other, a signal is then obtained which is representative of the angular position. However, it is also possible to measure the angular position or a change in angular position of the gantry beam with respect to the rail system by means of a sensor.

In a nursery, the underlying surface on which the cultivation ground and the rail system are located is often not flat. In order to then hold the gantry beam in a predetermined position with respect to the horizon or outside world, the underlying surface can be flattened and the rail system can be aligned flatly. However, according to the present invention, this may also be effected in a different way that is more favourable for horticulture and nurseries. According to a further embodiment of the invention, the assembly may be provided with:
- a level sensor system configured to generate an inclination signal which is representative of the inclination of the gantry beam with respect to the horizon,
- an inclination actuator configured to be able to change the inclination of the gantry beam with respect to the horizon,
- an inclination controller configured to control the inclination actuator in dependence on the inclination signal in such a way that changes in the inclination of the gantry beam with respect to the horizon are counteracted or minimized.

It is thus possible to keep the vertical angular position - i.e. the angular position measured in a vertical plane - of the gantry beam with respect to the outside world or horizon unchanged. The vertical angular position is in this case maintained in particular in such a way that the gantry beam remains horizontal during operation. The level sensor system may, for example, comprise two sensors which determine or measure the height of each end of the gantry beam with respect to the outside world. According to another example, the level sensor system may comprise a first sensor which measures or determines the angular position of one of the gantry uprights with respect to the vertical and a second sensor which measures or determines the angular position of the gantry beam with respect to this one gantry upright. Altogether this provides the information necessary to determine changes in the vertical angular position of the gantry beam with respect to the horizon. According to yet another example, the gantry beam may be provided with an inclinometer, which directly determines or measures the vertical angular position of the gantry beam with respect to the horizon.

Where the word 'helling' is used in the Dutch language document in relation to 'heling-signaal', 'helling-regelaar', 'helling-actuator', and 'hellingstand', `helling' means the English word 'inclination'.

In a nursery, the underlying surface on which the cultivation ground and the rail system are located is often not flat. The cultivation ground itself is also not equally flat everywhere. In order to then hold the gantry beam at a predetermined fixed height with respect to the cultivation floor, the underlying surface and/or the cultivation floor can be flattened and the rail system can be aligned flatly. However, according to the present invention, this may also be effected in a different way that is more favourable for horticulture and nurseries. According to a further embodiment of the invention, the assembly may be provided with:
- a height sensor system configured to generate a height signal which is representative of the vertical height of the tool with respect to the cultivation floor and/or is representative of the vertical height of the tool with respect to the top of the cultivated crop,
- a height actuator system configured to be able to change the vertical height of the tool with respect to the cultivation floor and/or the vertical height of the tool with respect to the top of the cultivated crop,
- a height controller configured to control the height actuator system in dependence on the height signal in such a way that changes in the vertical height of the tool with respect to the cultivation floor and/or changes in the vertical height of the tool with respect to the top of the cultivated crop are counteracted or minimized.

It is thus possible to prevent any change in the vertical height of the tool with respect to the cultivation floor - i.e. the vertical distance between the tool and the cultivation floor. Here, the vertical distance is maintained in particular in such a way that the distance between the tool and the cultivation floor is kept constant. According to one example, the height sensor system may comprise a sensor which is provided on the tool and measures or determines the vertical distance between the tool and the cultivation floor under the tool.

According to a further embodiment of the invention, the first gantry upright may be provided with one or more load-bearing first upright wheels and the first gantry upright may run on the rail system by means of one or more of these load-bearing first upright wheels. If, effectively considered, all the load-bearing first upright wheels run on the rail system or - if present - the conveyor, the first gantry upright will be supported completely by the rail system or the conveyor. Effectively considered is understood here to mean that the force(s) exerted by the first vertical upright with respect to the underlying surface is (are) transmitted to the underlying surface essentially completely via the rail system or the conveyor. No additional hardening of the underlying surface along the rail system or the conveyor is then required in order to prevent the formation of ruts in the underlying surface. According to a further implementation of this embodiment, the gantry drive of the first gantry upright may in this case be connected in terms of drive to one or more of the load-bearing first upright wheels.

According to a further embodiment of the invention, the second gantry upright may be provided with one or more second upright wheels which run essentially over the cultivation floor. 'Run essentially over the cultivation floor' is understood to mean that there is no underlying surface preventing the formation of ruts for the second upright wheels or no such surface is required. If the formation of ruts at the second upright wheels could lead to a hindering misalignment of the gantry construction, due to for example subsidence at the second gantry upright, this can be compensated according to the invention by means of the aforementioned level sensor system with inclination controller and/or by means of the aforementioned height sensor system with height controller. According to a further implementation of this embodiment, the gantry drive of the second gantry upright may in this case be connected in terms of drive to one or more of the second upright wheels.

According to a further embodiment of the invention, the assembly may further comprise a multiplicity of plant containers - such as plant pots - containing plants, said containers being positioned on the cultivation floor.

According to a further embodiment of the invention, the tool may comprise a gripper which is configured to grip, displace, and unload one or more plant containers or plants.

According to a further embodiment of the embodiment with a gripper, the manipulator may be configured to:
- be able to use the gripper to pick up one or more plant containers or plants from a pick-up point,
- be able to use the gripper to deposit the one or more picked-up plant containers or plants at an unloading point, and
- be able to displace the gripper between the pick-up point and the unloading point.

According to an alternative or additional further embodiment of the embodiment with a gripper, the gripper may comprise a fork with a multiplicity of teeth configured to grip a row of plant pots; and the gripper may be rotatable - in particular rotatable back and forth - with respect to the gantry beam about a vertical axis between a cultivation floor position, in which the teeth of the gripper are transverse to the gantry beam, and a rail position, in which the teeth of the gripper are transverse to the rail system. It is thus possible for a row of plants/plant containers/plant pots extending in a transverse direction of the rail system to be picked up from the cultivation floor and this row to be rotated through about 90° and then be dispensed, rotated 90°, at the rail system - for example positioned on a conveyor -, or, conversely, for a row of plants/plant containers/plant pots extending in the longitudinal direction of the rail system to be picked up at the rail system and this row to be rotated through about 90° and then be positioned, rotated 90°, on the cultivation floor such that the row positioned on the cultivation floor extends transverse to the rail system.

According to another alternative or additional further embodiment of the embodiment with a gripper, the gripper - considered in the longitudinal direction of the rail system and when it is above the rail system - has a gripper width; and
the first gantry upright may be designed, at the bottom, as a second gantry which - considered in the longitudinal direction of the rail system and measured between the second gantry - has an inside width which is greater than the gripper width and is configured in such a way that the gripper is able to be received between the second gantry. It is thus ensured that the gripper, when picking up plants/plant containers/plant pots at the rail system - for example from the conveyor - or when depositing plants/plant containers/plant pots at the rail system - for example on the conveyor-, can reach the rail system unobstructed and along a short path, in particular the shortest path. In this document, the 'second gantry' is referred to as 'second gantry' in order to differentiate it from the gantry construction, which forms a 'first gantry'.

According to a further embodiment of the assembly with a conveyor, the conveyor may, according to the invention, comprise a conveyor belt, in particular what is known as an endless conveyor belt.

According to a further embodiment of the assembly with a conveyor, the conveyor may, according to the invention, be provided with a conveyor control system which is configured to control a conveyor drive so as to bring plant containers or plants to the gantry construction by means of the conveyor and to, at the gantry construction, position the plant containers or plants at a predetermined position with respect to the gantry construction. According to a further embodiment of this embodiment, the conveyor drive may additionally be configured to position the plant holders or plants at said predetermined position with a predetermined mutual spacing. This for example facilitates the picking up of plant containers or plants by means of a gripper.

### BRIEF DESCRIPTION OF THE DRAWING

The present invention will be explained in more detail below with reference to the drawing. In the drawing:
Figure 1 shows a schematic illustration of an assembly according to a first embodiment of the invention, which embodiment is provided with a gripper, Figure 1 showing various phases of a process in which a row of plant pots is picked up from the cultivation floor and deposited on a conveyor. In Figure 1:
   - Fig. 1A shows a first phase in which the gripper is approaching the row of plant pots to be picked up from the cultivation floor,
   - Fig. 1B shows a second phase shortly after the row of plant pots has been picked up from the cultivation floor,
   - Fig. 1C shows a third phase in which the gripper with the picked-up row of plant pots approaches the conveyor, and
   - Fig. 1D shows a fourth phase shortly after the row of plant pots that was picked-up earlier has been deposited on the conveyor.
Figure 2 shows a schematic illustration of the same assembly as the assembly shown in Figure 1, Figure 2 showing various phases of a process in which a row of plant pots is picked up from the conveyor and deposited on the cultivation floor. In Figure 2:
   - Fig. 2A shows a first phase in which the gripper is approaching the row of plant pots to be picked up from the conveyor,
   - Fig. 2B shows a second phase shortly after the row of plant pots has been picked up from the conveyor,
   - Fig. 2C shows a third phase in which the gripper with the picked-up row of plant pots approaches the destination on the cultivation floor, and
   - Fig. 2D shows a fourth phase shortly after the row of plant pots that was picked-up earlier has been deposited on the cultivation floor.
Figure 3 shows a schematic illustration - based on Figure 2C - of an assembly according to a second embodiment of the invention, in which embodiment a rail system is present, but no conveyor.
Figure 4 shows a schematic illustration - based on Figure 2C - of an assembly according to a third embodiment of the invention, the tool being a camera and/or sprayer.

### DETAILED DESCRIPTION OF EMBODIMENTS

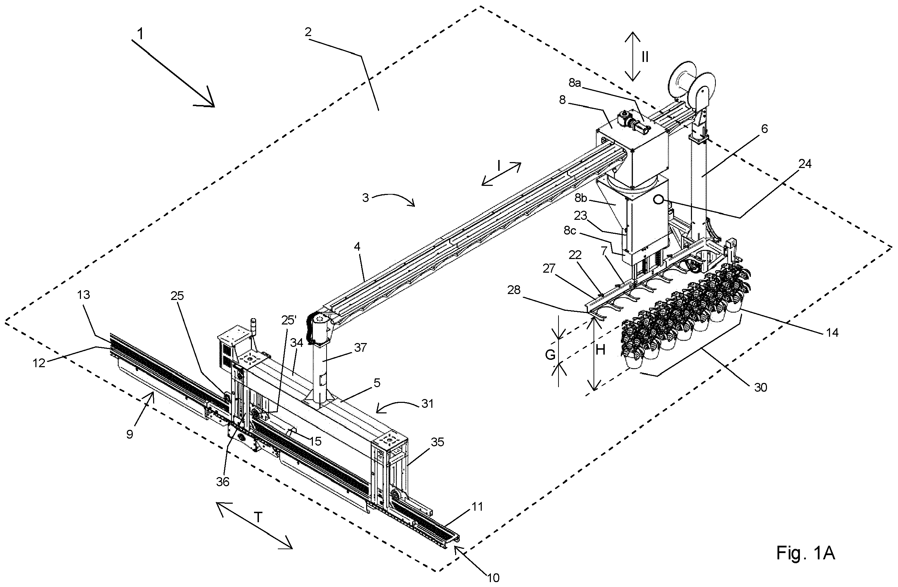

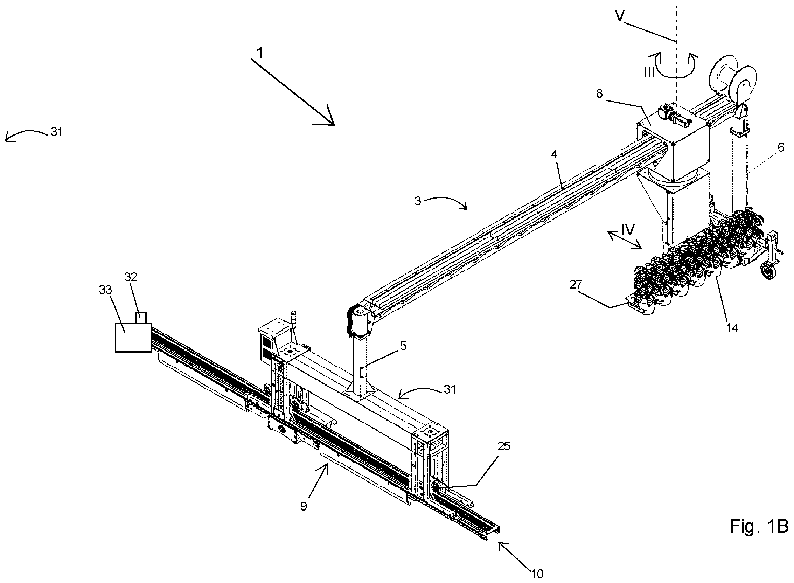

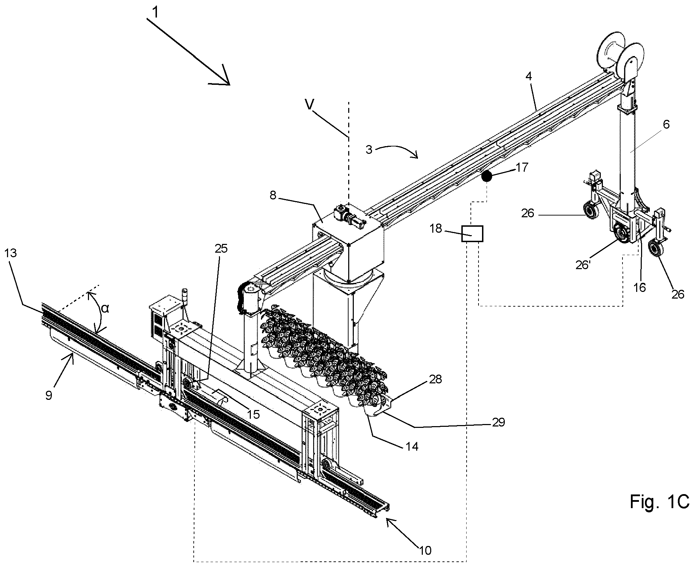

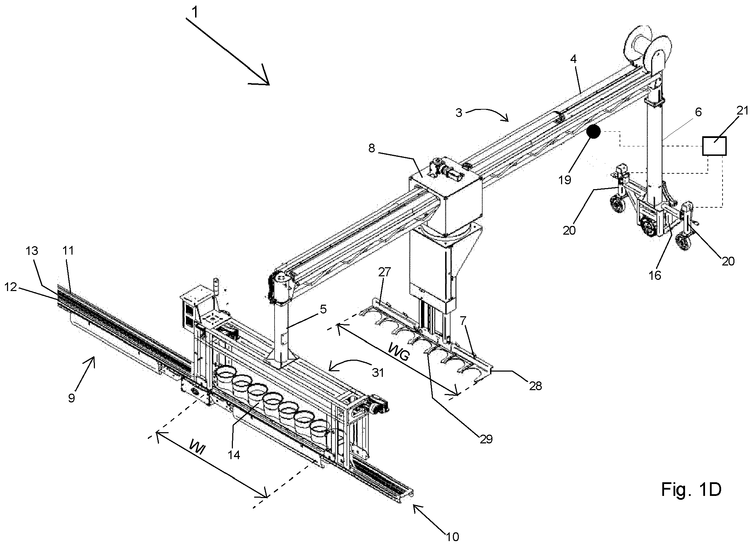

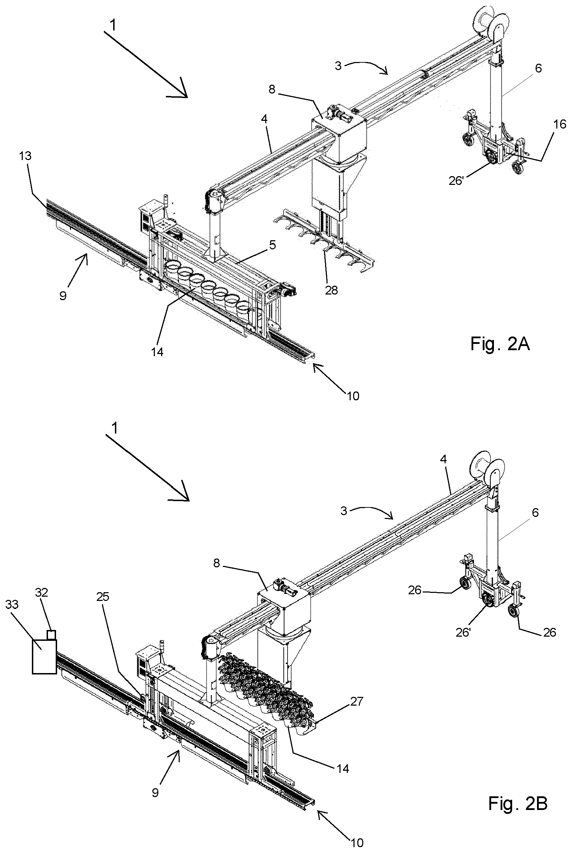

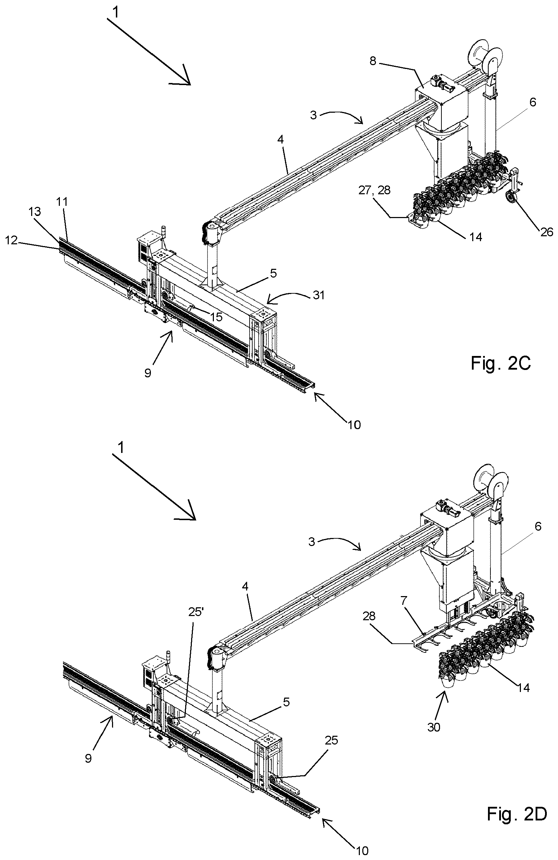

As mentioned, Figures 1 and 2 show the same assembly according to the invention in various phases of two work processes. Before discussing these figures in more detail, it is noted that:
- Figure 1A schematically indicates the cultivation floor 2 in quadrangular form by means of a dashed line, whereas this is not indicated in Figures 1B, 1C, 1D, 2A, 2B, 2C and 2D but is still considered to be present.
- Figures 1B and 2B schematically indicate the conveyor drive 33 and the conveyor control system 32, whereas these are not indicated in Figures 1A, 1C, 1D, 2A, 2C and 2D but are still considered to be present.
- Figure 1C schematically indicates the gantry position sensor system 17 and the gantry position controller 18, whereas these are not indicated in Figures 1A, 1B, 1D, 2A, 2B, 2C and 2D but are still considered to be present.
- Figure 1D schematically indicates an inclination controller 21 and a level sensor system 19, whereas these are not indicated in Figures 1A, 1B, 1C, 2A, 2B, 2C and 2D but are still considered to be present.

Figures 1 and 2 show a nursery assembly 1 which comprises a cultivation floor 2, a gantry construction 3, and a conveyor 9.

The gantry construction 3 comprises a gantry beam 4, a first gantry upright 5, a second gantry upright 6, a tool 7, and a manipulator 8. The first gantry upright 5 and second gantry upright 6 support the gantry beam 4 at a distance above the cultivation floor 2. The manipulator is in particular configured to be able to move the tool with respect to the gantry beam. This gantry construction 3 and the constituent components 4-8 thereof may be designed as depicted in Figures 1 and 2, but may also be designed differently.

In this example, the manipulator 8 is configured to be able to move the tool with three degrees of freedom with respect to the gantry beam 4. These degrees of freedom are:
- a first degree of freedom I: a back-and-forth movement of the tool 7 along the gantry beam 4, indicated by a double-headed arrow I in Figure 1A - this first degree of freedom I may, for example, be a translational movement;
- a second degree of freedom II: an up-and-down movement of the tool 7 with respect to the gantry beam 4, indicated by a double-headed arrow II in Figure 1A - this second degree of freedom II may, for example, be a translational movement; and
- a third degree of freedom III: in the form of a back-and-forth rotation of the tool 7 with respect to the gantry beam 4, indicated by a double-headed arrow III in Figure 1B - this third degree of freedom III may, for example, be a rotational movement.

The manipulator 8 may also be configured to provide the tool with more than these three degrees of freedom with respect to the gantry beam 4. It is also conceivable for the manipulator to be configured to provide the tool with only one degree of freedom with respect to the gantry beam, for example the degree of freedom indicated by the double-headed arrow I or the degree of freedom indicated by the double-headed arrow II. It is also conceivable for the manipulator to be configured to provide the tool with only two degrees of freedom with respect to the gantry beam, for example the degree of freedom indicated by the double-headed arrow I and the degree of freedom indicated by the double-headed arrow II.

The manipulator 8 from the example of Figures 1 and 2 has a top portion 8a, an intermediate portion 8b, and a bottom portion 8c. The bottom portion 8c is - for the degree of freedom II - retractable and extendable in the vertical direction with respect to the intermediate portion 8b by means of a height actuator system 23 which, according to a first example, may comprise one or more pneumatic or hydraulic cylinder-piston units or which, according to a second example, may comprise one or more electric motors with rack, spindle or toothed belt. The intermediate portion 8b, together with the bottom portion 8c, is rotatable with respect to the top portion 8a about the vertical axis V for the degree of freedom III. This rotatability may, for example, be controlled by means of an electric motor, but hydraulic control is also possible. The top portion 8a, together with the intermediate portion 8b and bottom portion 8c, is displaceable along the gantry beam for the degree of freedom I. According to a first example, this displacement can be realized by means of a drive which is accommodated in the top portion 8a and engages with the gantry beam 4. This drive may, for example, comprise a motor and toothed wheel, which toothed wheel engages with a rack running along the gantry beam or with a chain provided on the gantry beam. According to a different, second example, this displacement can be realized by positioning a motor on the gantry beam, said motor being used to set a chain or cable in motion which engages with the manipulator 8 in order to propel it along the gantry beam.

As can be seen in Figures 1 and 2, the gantry beam 4 extends in a direction transverse to the conveying direction T of the conveyor 9, see the double-headed arrow I which is transverse to the double-headed arrow T. The first gantry upright 5 is provided, at its bottom end, with a first gantry drive 15 (see, inter alia, Figure 1A), which in this example drives a first upright wheel 25'. The second gantry upright 6 is provided, at its bottom end, with a second gantry drive 16 (see, inter alia, Figure 1C), which in this example drives a second upright wheel 26'. The gantry drives 15 and 16 are configured to be able to displace the gantry construction back and forth, corresponding to the double-headed arrow T, in the longitudinal direction T of the conveyor 9 with respect to the conveyor 9. According to the invention, the conveyor 9 is provided with a rail system 10 which serves as a guide for the gantry construction during the back-and-forth movement in the longitudinal direction T of the conveyor 9 and the rail system 10.

In the example of Figures 1 and 2, the conveyor 9 comprises a conveyor belt 13, in particular a conveyor belt of the endless type with a conveying part on the top side and a return part on the bottom side. The conveyor 9 can, however, also be of a different type, such as a roller conveyor or combined conveyor belt/roller conveyor.

In the example of an embodiment depicted in Figures 1-2, the rail system 10 comprises a rail 11 and a rail 12. In this example, the rail 11 is provided on the top edge of a first side wall of the conveyor 9, but may also be provided elsewhere, for example next to the first side wall of the conveyor instead of on top of it. In this example, the rail 12 is provided on the top edge of a second side wall of the conveyor 9, but may also be provided elsewhere, for example next to the second side wall of the conveyor instead of on top of it.

In the example depicted in Figures 1-2, the first gantry upright 5 rests on rail 11 by means of first upright wheels 25, 25' and on rail 12 by means of further first upright wheels (not visible) - which may be directly opposite the first upright wheels 25, 25'. In this example, the rails 11, 12 support the entire weight of the first gantry upright 5, but it is also conceivable for further first upright wheels to rest on a different underlying surface than rails, such as on the cultivation floor 2, for example. In the example depicted in Figures 1-2, the second gantry upright 6 rests on the cultivation floor 2 by means of second upright wheels 26, 26'.

By driving the first gantry wheels 25' by means of the first gantry drive 15 and the second gantry wheels 26' by means of the second gantry drive 16, the gantry construction 3 can be displaced back and forth along the conveyor in the conveying direction of the conveyor. During this displacement of the gantry construction 3 along the conveyor or in between two of these displacement operations, the manipulator can move the tool 7 with respect to the gantry beam. It is thus possible for the tool 7 to be moved with respect to the cultivation floor 2 and the cultivated crop located thereon. If the tool 7 comprises a sprayer or atomizer, the cultivated crop can then be treated, for example, with a liquid and/or gas.

According to the invention, the tool 7 can, however, also comprise a gripper 27, such as the gripping fork 28 with eight teeth 29 which is depicted in Figures 1-2 and can be used to pick up and displace a row of seven plant pots 14 in one go. It is thus possible for plant pots to be transferred from the cultivation floor to the conveyor 9, by means of which conveyor 9 the plant pots 14 can then be brought to a further location - see Figures 1A-1D. However, it is also conversely possible in this case for the plant pots to be supplied by means of the conveyor in order for them to subsequently be positioned, from the conveyor, on the cultivation floor with the aid of the gripper, see Figures 2A-2D.

Fig. 1A shows a phase in which the gripper fork 27 is positioned at a distance H above the cultivation floor - and also above the crop - near the plant pots 14 to be picked up. Using the second degree of freedom II, the gripper fork 27 will then be moved downwards - in the downward direction of the double-headed arrow II - until it is at the height of the plant pots 14, for example at a height approximately halfway along the vertical height of the plant pots. This downward movement of the gripper fork 27 can for example be realized by means of the height actuator system 23 which can extend the bottom portion 8c of the manipulator in the downward direction with respect to the intermediate portion 8b of the manipulator. The gripper fork 27 will then be moved towards the plant pots 14 - in the right-hand direction of the double-headed arrow T. This can for example be realized by controlling the first gantry drive 15 and second gantry drive 16 in such a way that the gantry construction moves a little to the right. An alternative or additional way of realizing this may be to configure the manipulator with an additional degree of freedom, a fourth degree of freedom IV, by means of which the bottom portion 8c of the manipulator is displaceable with respect to the top portion 8a (or with respect to the intermediate portion 8b) of the manipulator in a direction parallel to the conveyor 9, see double-headed arrow IV in Figure 1B. As soon as the plant pots 14 are sufficiently between the teeth 29 of the fork gripper 28, the fork gripper 28 can - using the second degree of freedom II - move slightly upwards so as to cause the fork gripper 28 to engage with the plant pots and lift the plant pots 14 up from the cultivation floor 2. The phase shown in Figure 1B can thus be achieved. This lifting up can for example be realized by means of the height actuator system 23 which can retract/withdraw the bottom portion 8c of the manipulator with respect to the intermediate portion of the manipulator.

The lifting of plant pots 14 up from the cultivation floor 2 to the phase shown in Figure 1B can take place in one continuous lifting movement. In order to prevent any damage to adjacent crops, it is also possible for this lifting up to be carried out in stepped fashion in two (or more) lifting movements, with a backward movement of the gripper fork 28 in a direction opposite the one in which the forks point, i.e. in the left-hand direction of the double-headed arrow T, being carried out between two lifting movements. This backward movement can for example be realized by controlling the first gantry drive 15 and second gantry drive 16 in such a way that the gantry construction moves a little to the left. According to another example, this backward movement can be carried out by configuring the manipulator with the aforementioned fourth degree of freedom IV.

From the phase shown in Figure 1B, the gripper fork will then be moved horizontally towards the conveyor 9 by virtue of the manipulator 8 being displaced along the gantry beam 4 towards the conveyor 9. This can be realized by using the first degree of freedom I. In parallel with, prior to, or during this horizontal displacement of the manipulator 8/gripper fork 28 along the gantry beam 4, the gripper fork 28 will be rotated through 90° such that the teeth 29 of the gripper fork end up pointing in the direction of the conveyor. This rotation of the gripper fork through 90° can be realized by rotating - using the third degree of freedom III - the intermediate portion 8b and bottom portion 8c of the manipulator 8 with respect to the top portion 8a of the manipulator about the vertical axis V, see double-headed arrow III in Figure 1B. Thus, the gripper arrives at the phase shown in Figure 1C from the phase shown in Figure 1B.

In the phase shown in Figure 1C, the gripper fork 28 and row of plant pots 14 picked up thereby approach the conveyor 9. The gripper fork 28 will then - using the second degree of freedom II - drop vertically downwards, for example by operating the height actuator system 23 in such a way that the plant pots 14 with the crop located therein are dropped to below the horizontal beam 34. The gripper fork 28 is then - using the first degree of freedom I - moved further towards the conveyor 9 until the picked-up row of plant pots 14 is above (the conveyor belt 13 of) the conveyor 9. The gripper fork 28 can then - using the second degree of freedom II - drop further downwards until the plant pots 14 are on the conveyor 9, and can then - using the second degree of freedom II - drop slightly further still until the plant pots come loose from the engagement with the gripper fork 28. The gripper fork can then - using the first degree of freedom - be moved away from the conveyor 9 to the position shown in Figure 1D. If required, the gripper fork 27 can then be brought back to a phase comparable to Figure 1A in order to collect a subsequent row of plant pots.

With reference to Figure 1D, it is noted that the crop in the plant pots 14 is not depicted here for the purpose of maintaining the clarity of the figure. If the growth of the crop is still insufficient, the crop will possibly not yet be visible. If the growth of the crop is already sufficient, it will be visible.

Figures 2A to 2D show essentially the reverse process of Figures 1A to 1D.

In Figure 2A, the plant pots 14 are located on the conveyor 9 ready to be picked up. For the purpose of maintaining the clarity of Figure 2A, no crop is depicted here. If the crop has not yet grown or its growth is insufficient, the crop will not yet be visible. If the growth of the crop is sufficient, it will be visible.

Using the first degree of freedom I, the gripper fork 28 is moved towards the conveyor 9 for example by means of the drive provided in the top portion 8a of the manipulator. Using the second degree of freedom II, the gripper fork is moved, for example by means of the height actuator system 23, downwards to a height lower than the top edge of the plant pots, for example to approximately half the height of the plant pots. If the gripper fork 28 is not yet parallel to the conveyor, the gripper fork 28 can be brought, using the third degree of freedom III, into a position parallel to the conveyor 9, with the teeth 29 pointing towards the conveyor 9. The gripper fork 27 is then brought into engagement with the row of plant pots 14 to be picked up from the conveyor by virtue of the gripper fork being moved - using the first degree of freedom I - further towards the conveyor 9 and then being lifted up slightly - using the second degree of freedom II. After the row of plant pots to be picked up has been lifted up, the gripper fork 28 moves - using the first degree of freedom I - away from the conveyor 9 and can potentially be lifted slightly further upwards - using the second degree of freedom. This results in the phase shown in Figure 2B.

From the phase shown in Figure 2B, the gripper fork 28 is brought - using the first degree of freedom and the third degree of freedom - to the phase shown in Figure 2C, for example by virtue of the manipulator 8 being displaced along the gantry beam 4 by means of the drive provided in the top portion 8a thereof and by virtue of the intermediate portion 8b and bottom portion 8c of the manipulator being rotated through 90° with respect to the top portion 8a of the manipulator 8.

From the phase shown in Figure 2C, the gripper fork is moved - using the second degree of freedom - downwards, for example by virtue of the bottom portion 8c of the manipulator being extended with respect to the intermediate portion 8b of the manipulator 8. The plant pots 14 thus end up on the cultivation floor and can be unloaded from the gripper fork 28, for example by virtue of the gripper fork being moved slightly further downwards still - using the second degree of freedom. The gripper fork can then be moved - using the ability of the gantry construction to be displaced along the conveyor and/or using the optional fourth degree of freedom IV - horizontally away from the deposited row and be lifted up to the phase shown in Figure 2D. From here, the gripper fork can be brought - using the first degree of freedom and the third degree of freedom - back to the phase shown in Figure 2A in order to pick up a subsequent row of plant pots.

In the example of Figures 1-2, the first gantry upright 5 is designed, at the bottom, with a second gantry 31, this gantry being transverse to the gantry of the gantry construction. Referring to Figure 1A, the first gantry upright 5 thus comprises a column 37 with a gantry 31 below it, which gantry 31 comprises a horizontal beam 34 and two vertical support structures 35, 36 by means of which the gantry upright 5 stands on the rails 11, 12 of the rail system 10. Referring to Figure 1D, the inside width WI of the second gantry 31 is greater than the gripper width WG such that the gripper can come under the first gantry upright at the conveyor. In this case, the inside width WI is the spacing - considered in the longitudinal direction T of the conveyor/the rail system - between the support structure 35 and support structure 36.

As schematically indicated in Figure 1D, the assembly according to the invention may be provided with a level sensor system 19, one or more inclination actuators 20, and an inclination controller 21. The level sensor system 19 is in this case configured to generate an inclination signal which is representative of the angular position of the gantry beam 4 with respect to the horizon. As indicated in Figure 1D by means of the dashed line between the level sensor system 19 and the inclination controller 21, this inclination signal travels to the inclination controller 21. The inclination controller 21 is configured to control the inclination actuators 20 in dependence on the inclination signal in such a way that changes in the angular position of the gantry beam with respect to the horizon are counteracted or minimized. This control is indicated in Figure 1D by means of the dashed lines between the inclination controller 21 and the inclination actuators 20. The inclination actuators may, according to a first example, comprise one or more pneumatic or hydraulic cylinder-piston units and may, according to a second example, comprise one or more electric motors with rack, spindle or toothed belt. It is thus possible to compensate for disparities in the cultivation floor 2 over which the second gantry upright 6 moves.

As schematically indicated in Figure 1A, the assembly according to the invention may be provided with a height sensor system 22, a height actuator system 23, and a height controller 24. The height sensor system 22 is in this case configured to generate a height signal which is representative of the vertical height H of the tool with respect to the cultivation floor 2 and/or is representative of the vertical height G of the tool 7 with respect to the top of the cultivated crop. The height controller 24 is configured to control the height actuator system 23 in dependence on the height signal in such a way that changes in the vertical height H or the vertical height G are counteracted or minimized. It is thus possible to compensate for disparities in the cultivation floor 2 under the tool 7 and/or for disparities in crop growth under the tool 7. According to the example in Figures 1-2, this height control can make use of the height actuator system 23 which is also used for the third degree of freedom III, but can also make use of a different height actuator system, for example a height actuator system which can adjust the vertical height of the gantry beam 4 or a height actuator system which can adjust the vertical height between, for example, the top portion 8a and the intermediate portion 8b of the manipulator.

As schematically indicated in Figure 1C, the assembly according to the invention may be provided with a gantry position sensor system 17 and a gantry position controller 18. The gantry position sensor system 17 is in this case configured to generate a gantry position signal which is representative of the horizontal angular position α of the gantry beam 4 with respect to the conveyor 9/the rail system 10. As indicated in Figure 1C by means of the dashed line between the gantry position sensor system 17 and the gantry position controller 18, this gantry position signal travels to the gantry position controller 18. The gantry position controller 18 is configured to control the first gantry drive 15 and second gantry drive 16 in dependence on the gantry position signal in such a way that changes in the horizontal angular position α of the gantry beam with respect to the conveyor 9 are counteracted or minimized. This control is indicated in Figure 1C by means of the dashed lines between the gantry position controller 18 and the gantry drives 15, 16. It is thus possible, during the displacement of the gantry construction 3 along the conveyor 9, to compensate for disparities between the horizontal displacement of the first gantry upright 5 and the horizontal displacement of the second gantry upright 6.

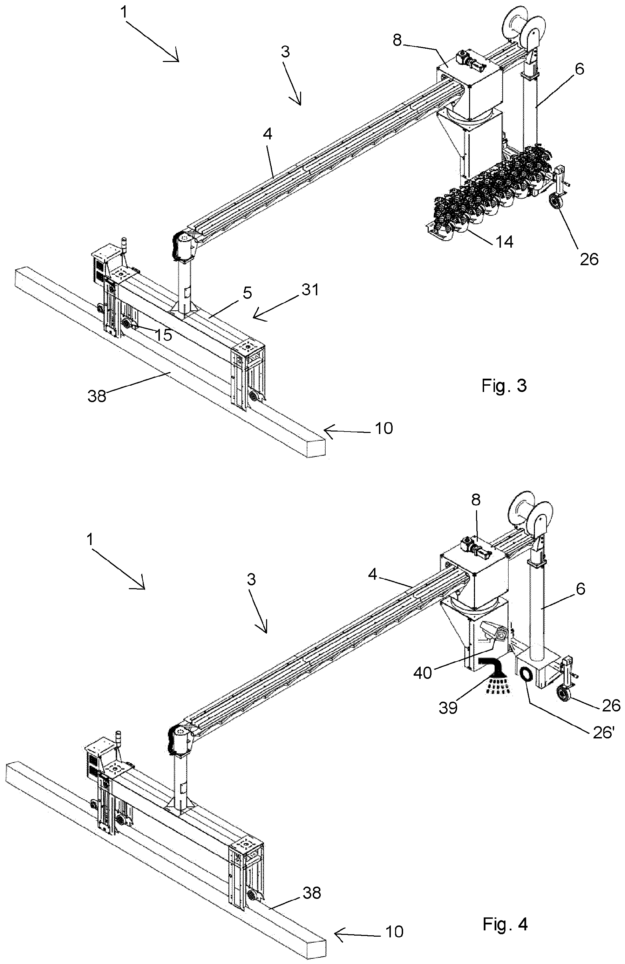

Figure 3 shows a second embodiment of the invention, and Figure 4 shows a third embodiment of the invention. Both figures are based on Figure 2C. With regard to details that are not discussed again in more detail here and are moreover similar to the first embodiment according to Figures 1 and 2, reference is made to the discussion of Figures 1 and 2.

The assembly according to the invention is illustrated in Figures 1-2 on the basis of a conveyor 9 provided with a rail system 10. However, the assembly according to the invention can also not have a conveyor 9. And it is also possible for the tool to be a different tool than the gripper shown in Figures 1-2.

Figure 3 shows the second embodiment of the invention. In this second embodiment, the conveyor provided with rails 11 and 12 is replaced by a rail 38. Although the first gantry upright 5 is shown as running on one rail 38 in Figure 3, it is also conceivable for the first gantry upright to run on multiple rails, such as two parallel rails.

Figure 4 shows, in a third embodiment, that the tool can also be a different tool than a gripper. Figure 4 shows that the tool can also be a sprayer 39 and/or sensor 40. The sprayer may, for example, be a camera 40 for monitoring or examination of the crop. As depicted in Figure 4, instead of a gripper, the tool can comprise one or more different tools, for example a camera and/or a sprayer. The use of a camera makes it possible, for example, to monitor the crop from above. This monitoring may, for example, be for the purpose of (scientific) examination, for the purpose of monitoring the health, for the purpose of tracking the growth, etc. If, for example, a disease or drought is observed, the crop can then be treated in a very targeted manner, for example with the aid of the sprayer. It is even conceivable for this treatment to take place almost immediately if a sprayer is also provided next to a camera, as depicted in Figure 4.

It must be noted that - according to the invention - a nursery assembly comprising a conveyor provided with rails, and comprising a manipulator 8 provided with a gripper, such as depicted in Figures 1 and 2, may additionally also be provided with further tools such as a camera and/or sprayer. It must also be noted that - according to the invention - a nursery assembly comprising one or more rails but no conveyor, and comprising a manipulator 8 provided with a gripper, such as depicted in Figure 3, may additionally also be provided with further tools such as a camera 40 and/or sprayer 39.

The present invention and various embodiments thereof can be articulated as outlined in the following clauses:
1: Nursery assembly (1) for use in a nursery,
   wherein the assembly (1) comprises:
      - a cultivation floor (2),
      - a gantry construction (3) comprising
         - a gantry beam (4),
         - a first gantry upright (5) and a second gantry upright (6), which gantry uprights (5, 6) support the gantry beam (4) at a distance above the cultivation floor (2),
         - a tool (7), and
         - a manipulator (8) for moving the tool (7) with respect to the gantry beam (4), and
      - a rail system (10) along which the first gantry upright (5) is displaceable;
   wherein the rail system is arranged along the cultivation floor (2) and is configured as a guide of the first gantry upright when displacing the first gantry upright (5) along the rail system (10);
   wherein the manipulator (8) is configured to be able to displace the tool (7) along the gantry beam (4) and/or to be able to rotate said tool with respect to the gantry beam;
   wherein the gantry beam (4) extends in a direction transverse to the rail system (10); and
   wherein the gantry uprights (5, 6) are each provided, at the bottom ends thereof, with a gantry drive (15 and 16, respectively), which gantry drives (15, 16) are configured to be able to displace the gantry construction (3) in a longitudinal direction (T) of the rail system (10).
2: Assembly (1) according to clause 1,
   wherein the rail system (10) and/or the first gantry upright (5) are configured in such a way that the rail system (10) is a rail system over which the first gantry upright (5) is displaceable.
3: Assembly (1) according to either of the preceding clauses,
   wherein the assembly (1) is provided with:
   - a gantry position sensor system (17) configured to generate a gantry position signal which is representative of a horizontal angular position (α) of the gantry beam (4) with respect to the rail system (10); and
   - a gantry position controller (18) configured to, when the gantry construction (3) is being displaced along the rail system (10), control the first gantry drive (15) and the second gantry drive (16) in dependence on the gantry position signal in such a way that changes in the horizontal angular position (α) of the gantry beam (4) with respect to the rail system (10) are counteracted or minimized.
4: Assembly (1) according to clause 3,
   wherein the gantry position controller (18) is configured to, when the gantry construction (3) is being displaced along the rail system (10), control the first gantry drive (15) and the second gantry drive (16) in dependence on the gantry position signal in such a way that the gantry beam (4) is held perpendicular to the rail system (10).
5: Assembly (1) according to one of the preceding clauses,
   wherein the assembly (1) is provided with:
   - a level sensor system (19) configured to generate an inclination signal which is representative of an inclination of the gantry beam (4) with respect to the horizon,
   - an inclination actuator (20) configured to be able to change the inclination of the gantry beam (4) with respect to the horizon,
   - an inclination controller (21) configured to control the inclination actuator (20) in dependence on the inclination signal in such a way that changes in the inclination of the gantry beam (4) with respect to the horizon are counteracted or minimized.
6: Assembly (1) according to one of the preceding clauses,
   wherein the assembly (1) is provided with:
   - a height sensor system (22) configured to generate a height signal which is representative of the vertical height (H) of the tool (7) with respect to the cultivation floor (2) and/or is representative of the vertical height (G) of the tool (7) with respect to the top of the cultivated crop,
   - a height actuator system (23) configured to be able to change the vertical height (H) of the tool (7) with respect to the cultivation floor (2) and/or the vertical height (G) of the tool (7) with respect to the top of the cultivated crop,
   - a height controller (24) configured to control the height actuator system (23) in dependence on the height signal in such a way that changes in the vertical height of the tool (7) with respect to the cultivation floor (2) and/or changes in the vertical height (G) of the tool (7) with respect to the top of the cultivated crop are counteracted or minimized.
7: Assembly (1) according to one of the preceding clauses,
   wherein the first gantry upright (5) is provided with one or more first upright wheels (25) and the first gantry upright (5) runs on the rail system (10) by means of one or more of the first upright wheels (25).
8: Assembly (1) according to clause 7, wherein the first gantry drive (15) of the first gantry upright (5) is connected in terms of drive to one or more of the first upright wheels (25).
9: Assembly (1) according to one of the preceding clauses,
   wherein the second gantry upright (6) is provided with one or more second upright wheels (26) which run essentially over the cultivation floor (2).
10: Assembly (1) according to clause 9, wherein the second gantry drive (16) of the second gantry upright (6) is connected in terms of drive to one or more of the second upright wheels (26).
11: Assembly (1) according to one of the preceding clauses,
   wherein the assembly (1) further comprises a multiplicity of plant containers (14), such as plant pots, containing plants, said containers being positioned on the cultivation floor (2).
12: Assembly (1) according to one of the preceding clauses,
   wherein the tool (7) comprises a gripper (27) which is configured to grip, displace, and unload one or more plant containers (14) or plants.
13: Assembly (1) according to clause 12,
   wherein the manipulator (8) is configured to:
   - be able to use the gripper (27) to pick up one or more plant containers (14) or plants from a pick-up point,
   - be able to use the gripper (27) to deposit the one or more picked-up plant containers (14) or plants at an unloading point, and
   - be able to displace the gripper (27) between the pick-up point and the unloading point.
14: Assembly (1) according to one of clauses 12 and 13,
   wherein the gripper (27) comprises a fork (28) with a multiplicity of teeth (29) configured to grip a row (30) of plant pots; and
   wherein the gripper (27) is rotatable with respect to the gantry beam (4) about a vertical axis (V) between a cultivation floor position, in which the teeth (29) of the fork (28) are transverse to the gantry beam (4), and a rail position, in which the teeth (29) of the fork (28) are transverse to the rail system (10).
15: Assembly (1) according to one of clauses 12-14,
   wherein the gripper (27), considered in the longitudinal direction of the rail system and when the gripper (27) is above the rail system (10), has a gripper width (WG),
   wherein the first gantry upright (5) is designed, at the bottom, as a second gantry (31), wherein the second gantry (31), considered in the longitudinal direction (T) of the rail system (10) and measured between the second gantry, has an inside width (WI), and
   wherein the inside width (Wl) is greater than the gripper width (WG) and is configured in such a way that the gripper (27) fits within the second gantry (31).
16: Assembly (1) according to one of the preceding clauses,
   wherein the assembly further comprises a conveyor (9) which extends along the rail system (10), and wherein the conveyor (9) is provided with the rail system (10).
17: Assembly (1) according to clause 16, wherein the conveyor (9) comprises a conveyor belt (13).
18: Assembly (1) according to clause 16 or clause 17,
   wherein the conveyor (9) is provided with a conveyor control system (32) which is configured to control a conveyor drive (33) so as to bring plant containers (14) or plants to the gantry construction (3) by means of the conveyor (9) and to, at the gantry construction (3), position them at a predetermined position with respect to the gantry construction (3).
19: Assembly (1) according to one or more of the preceding clauses, wherein the tool comprises one or more of the following tools: a sensor, a gripper, a sprayer, a blade, a cutter.
20: Assembly (1) according to clause 19, wherein the sensor comprises a camera and/or a temperature gauge.

**LIST OF REFERENCES IN THE DRAWING**

| | | | |
|---|---|---|---|
| 1 | nursery assembly | 31 | second gantry |
| 2 | cultivation floor | 32 | conveyor control system |
| 3 | gantry construction | 33 | conveyor drive |
| 4 | gantry beam | 34 | horizontal beam |
| 5 | first gantry upright | 35 | vertical support structure |
| 6 | second gantry upright | 36 | vertical support structure |
| 7 | tool | 37 | column |
| 8 | manipulator | 38 | rail |
| 8a | top portion of manipulator | 39 | sprayer |
| 8b | intermediate portion of manipulator | 40 | camera |
| 8c | bottom portion of manipulator | | |
| 9 | conveyor | α | horizontal angular position with respect to rail system |
| 10 | rail system | | |
| 11 | rail | G | distance between tool and crop |
| 12 | rail | H | distance between tool and cultivation floor |
| 13 | conveyor belt | | |
| 14 | plant container | T | longitudinal direction of conveyor/rail system (displacement direction) |
| 15 | first gantry drive | | |
| 16 | second gantry drive | | |
| 17 | gantry position sensor system | V | vertical axis |
| 18 | gantry position controller | WG | gripper width |
| 19 | level sensor system | WI | inside width |
| 20 | inclination actuator | | |
| 21 | inclination controller | | |
| 22 | height sensor system | | |
| 23 | height actuator system | | |
| 24 | height controller | | |
| 25 | first upright wheel | | |
| 25' | driven first upright wheel | | |
| 26 | second upright wheel | | |
| 26' | driven second upright wheel | | |
| 27 | gripper | | |
| 28 | fork | | |
| 29 | tooth of fork | | |
| 30 | row of plant pots | | |

## Claims

1. Nursery assembly (1) for use in a nursery,
wherein the assembly (1) comprises:
• a cultivation floor (2),
• a gantry construction (3) comprising
- a gantry beam (4),
- a first gantry upright (5) and a second gantry upright (6), which gantry uprights (5, 6) support the gantry beam (4) at a distance above the cultivation floor (2),
- a tool (7), and
- a manipulator (8) for moving the tool (7) with respect to the gantry beam (4), and
• a rail system (10) along which the first gantry upright (5) is displaceable;
wherein the rail system is arranged along the cultivation floor (2) and is configured as a guide of the first gantry upright when displacing the first gantry upright (5) along the rail system (10); wherein the manipulator (8) is configured to be able to displace the tool (7) along the gantry beam (4) and/or to be able to rotate said tool with respect to the gantry beam;
wherein the gantry beam (4) extends in a direction transverse to the rail system (10); and wherein the gantry uprights (5, 6) are each provided, at the bottom ends thereof, with a gantry drive (15 and 16, respectively), which gantry drives (15, 16) are configured to be able to displace the gantry construction (3) in a longitudinal direction (T) of the rail system (10).

2. Assembly (1) according to claim 1,
wherein the assembly (1) is provided with:
- a gantry position sensor system (17) configured to generate a gantry position signal which is representative of a horizontal angular position (α) of the gantry beam (4) with respect to the rail system (10); and
- a gantry position controller (18) configured to, when the gantry construction (3) is being displaced along the rail system (10), control the first gantry drive (15) and the second gantry drive (16) in dependence on the gantry position signal in such a way that changes in the horizontal angular position (α) of the gantry beam (4) with respect to the rail system (10) are counteracted or minimized.

3. Assembly (1) according to claim 2,
wherein the gantry position controller (18) is configured to, when the gantry construction (3) is being displaced along the rail system (10), control the first gantry drive (15) and the second gantry drive (16) in dependence on the gantry position signal in such a way that the gantry beam (4) is held perpendicular to the rail system (10).

4. Assembly (1) according to one of the preceding claims,
wherein the assembly (1) is provided with:
- a level sensor system (19) configured to generate an inclination signal which is representative of an inclination of the gantry beam (4) with respect to the horizon,
- an inclination actuator (20) configured to be able to change the inclination of the gantry beam (4) with respect to the horizon,
- an inclination controller (21) configured to control the inclination actuator (20) in dependence on the inclination signal in such a way that changes in the inclination of the gantry beam (4) with respect to the horizon are counteracted or minimized.

5. Assembly (1) according to one of the preceding claims,
wherein the assembly (1) is provided with:
- a height sensor system (22) configured to generate a height signal which is representative of the vertical height (H) of the tool (7) with respect to the cultivation floor (2) and/or is representative of the vertical height (G) of the tool (7) with respect to the top of the cultivated crop,
- a height actuator system (23) configured to be able to change the vertical height (H) of the tool (7) with respect to the cultivation floor (2) and/or the vertical height (G) of the tool (7) with respect to the top of the cultivated crop,
- a height controller (24) configured to control the height actuator system (23) in dependence on the height signal in such a way that changes in the vertical height of the tool (7) with respect to the cultivation floor (2) and/or changes in the vertical height (G) of the tool (7) with respect to the top of the cultivated crop are counteracted or minimized.

6. Assembly (1) according to one of the preceding claims,
wherein the first gantry upright (5) is provided with one or more first upright wheels (25) and the first gantry upright (5) runs on the rail system (10) by means of one or more of the first upright wheels (25).

7. Assembly (1) according to claim 6, wherein the first gantry drive (15) of the first gantry upright (5) is connected in terms of drive to one or more of the first upright wheels (25).

8. Assembly (1) according to one of the preceding claims,
wherein the second gantry upright (6) is provided with one or more second upright wheels (26) which run essentially over the cultivation floor (2).

9. Assembly (1) according to claim 8, wherein the second gantry drive (16) of the second gantry upright (6) is connected in terms of drive to one or more of the second upright wheels (26).

10. Assembly (1) according to one of the preceding claims,
wherein the assembly (1) further comprises a multiplicity of plant containers (14), such as plant pots, containing plants, said containers being positioned on the cultivation floor (2).

11. Assembly (1) according to one of the preceding claims,
wherein the tool (7) comprises a gripper (27) which is configured to grip, displace, and unload one or more plant containers (14) or plants;
wherein the manipulator (8) is configured to:
- be able to use the gripper (27) to pick up one or more plant containers (14) or plants from a pick-up point,
- be able to use the gripper (27) to deposit the one or more picked-up plant containers (14) or plants at an unloading point, and
- be able to displace the gripper (27) between the pick-up point and the unloading point;
wherein the gripper (27) comprises a fork (28) with a multiplicity of teeth (29) configured to grip a row (30) of plant pots; and
wherein the gripper (27) is rotatable with respect to the gantry beam (4) about a vertical axis (V) between a cultivation floor position, in which the teeth (29) of the fork (28) are transverse to the gantry beam (4), and a rail position, in which the teeth (29) of the fork (28) are transverse to the rail system (10).

12. Assembly according to claim 11,
wherein the gripper (27), considered in the longitudinal direction of the rail system and when the gripper (27) is above the rail system (10), has a gripper width (WG),
wherein the first gantry upright (5) is designed, at the bottom, as a second gantry (31), wherein the second gantry (31), considered in the longitudinal direction (T) of the rail system (10) and measured between the second gantry, has an inside width (WI), and
wherein the inside width (Wl) is greater than the gripper width (WG) and is configured in such a way that the gripper (27) fits within the second gantry (31).

13. Assembly (1) according to one of the preceding claims,
wherein the assembly further comprises a conveyor (9), such as a conveyor comprising a conveyor belt (13), which extends along the rail system (10), and wherein the conveyor (9) is provided with the rail system (10).

14. Assembly (1) according to claim 13,
wherein the conveyor (9) is provided with a conveyor control system (32) which is configured to control a conveyor drive (33) so as to bring plant containers (14) or plants to the gantry construction (3) by means of the conveyor (9) and to, at the gantry construction (3), position them at a predetermined position with respect to the gantry construction (3).

15. Assembly (1) according to one or more of the preceding claims, wherein the tool comprises one or more of the following tools: a sensor - such as a camera and/or temperature gauge -, a gripper, a sprayer, a blade, a cutter.
